# EUROPÄISCHE PATENTSCHRIFT

(11) **EP 3 533 043 B1**
(45) Veröffentlichungstag und Bekanntmachung des Hinweises auf die Patenterteilung: **10.01.2024**
(21) Anmeldenummer: 17835651.5
(22) Anmeldetag: 18.12.2017
(51) Int. Cl.: G09B 9/04, B60W 40/04, B60W 50/02, B60W 50/029, B60W 50/023, G05B 13/02, B60R 16/023, G08G 1/09, G08G 1/0967, G09B 19/14, G06N 3/08, G06N 3/006

(54) **PRÄDIKTION VON VERKEHRSSITUATIONEN**
PREDICTION OF TRAFFIC SITUATIONS
PRÉDICTION DE SITUATIONS DE CIRCULATION ROUTIÈRE

(30) Priorität: 21.12.2016 DE 102016225772
(43) Veröffentlichungstag der Anmeldung: 04.09.2019
(73) Patentinhaber: Audi AG, 85045 Ingolstadt (DE)
(72) Erfinder: SCHÖN, Torsten, 85111 Pietenfeld (DE)
(86) Internationale Anmeldenummer: PCT/EP2017/083318
(87) Internationale Veröffentlichungsnummer: WO 2018/114808

(56) Entgegenhaltungen:
- DE-A1- 19 527 323
- DE-A1-102006 054 425
- US-A1- 2010 063 648
- US-B1- 6 269 306

## Beschreibung

Die vorliegende Erfindung betrifft ein Verfahren zum Ermitteln einer vorgegebenen Verkehrssituation. Es sollen dabei Eingangssignale analysiert werden, um daraus auf eine von gegebenenfalls mehreren Verkehrssituationen zu schließen. Darüber hinaus betrifft die vorliegende Erfindung auch ein Verfahren zum Trainieren eines lernfähigen Systems zur Prädiktion einer vorgegebenen Verkehrssituation. Ferner betrifft die vorliegende Erfindung ein Fahrerassistenzsystem mit einem lernfähigen System sowie ein Kraftfahrzeug mit einem derartigen Fahrerassistenzsystem.

Für autonomes Fahren, aber auch für Fahrerassistenzsysteme kann es wichtig sein, die aktuelle Verkehrssituation richtig einzuschätzen. Eine automatisierte Prädiktion oder Ermittlung einer Verkehrssituation kann auf der Basis von Sensordaten erfolgen, die in der augenblicklichen Situation zur Verfügung stehen. Für Fahrerassistenzsysteme und autonomes Fahren muss die Situationsinterpretation im Fahrzeug stattfinden.

Derzeit werden zur Situationsinterpretation verschiedene Sensoriken im Fahrzeug verwendet. Ein Ingenieur entscheidet bei der Entwicklung, welche Systeme welche Sensorik benutzen, um die Umgebung zu erfassen. Für die Objekterkennung wird beispielsweise die Frontkamera verwendet, auf welcher eine Objekterkennungssoftware läuft.

Ist beispielsweise die Kamera-Sensorik nicht verfügbar, was z.B. aufgrund schlechter Lichtverhältnisse der Fall sein kann, so ist die Objekterkennung nicht mehr möglich. Ein Ausgleich mittels anderer, im Fahrzeug verfügbarer Sensorik ist in der Regel nicht möglich oder muss manuell mit sehr viel Aufwand konfiguriert werden.

Aus der Druckschrift EP 2 604 478 A1 ist ein Verfahren zur Erkennung von Funktionsfehlern einer Multisensoranordnung eines Fahrerassistenzsystems bekannt. Auf der Basis von Informationen aus einer für eine vereinheitlichte Erfassung einer aktuellen Fahrzeugumgebung durchgeführten Datenfusion der von den Sensoren der Multisensoranordnung erhaltenen Daten wird wenigstens eine aktuelle Leistungsgröße der Multisensoranordnung ermittelt. Die ermittelte aktuelle Leistungsgröße wird mit einer entsprechenden, für die fehlerfreie Multisensoranordnung erwarteten Leistungsgröße verglichen. Eine Entscheidung darüber, ob ein Funktionsfehler des beziehungsweise der betreffenden Sensoren der Multisensoranordnung vorliegt oder nicht, wird in Abhängigkeit vom Ergebnis des Vergleichs der auf der Basis der Informationen aus der Sensordatenfusion ermittelten aktuellen Leistungsgröße mit der erwarteten Leistungsgröße der Multisensoranordnung getroffen.

Die Druckschrift US 2010 / 0 063 648 A1 offenbart eine verteilte Informationsbank zum Lokalisieren von Fahrzeugen. Es wird ein Computerprogrammprodukt zur Steuerung eines Fahrzeugs beschrieben. Das Computerprogrammprodukt kann ein computeraufzeichnungsfähiges Medium mit einem computerbenutzbaren Programm-Code zur Identifizierung eines dynamischen Zustands aufweisen. Wenn der dynamische Zustand erkannt wird, steuert der Programmcode mittels einer Informationsbank das Fahrzeug.

Die Offenlegungsschrift DE 195 27 323 A1 betrifft eine Schaltungsanordnung zum Steuern einer Einrichtung in einem Kraftfahrzeug. Durch ein Fuzzy-System werden Sensorsignale aus dem Kraftfahrzeug ausgewertet und Stellsignale für die zu steuernde Einrichtung erzeugt. Das Fuzzy-System ist mit einem neuronalen Netz verbunden, das die Sensorsignale aus dem Kraftfahrzeug und Referenzdaten aus einer Aufzeichnung von Fahrdaten des Kraftfahrzeugs auswertet.

Des Weiteren offenbart die Druckschrift DE 10 2014 210 147 A1 ein Fahrzeugsteuersystem für eine autonome Führung eines Fahrzeugs. Das Fahrzeugsteuersystem weist eine Steuerung zum autonomen Führen des Fahrzeugs auf der Basis eines Sensorsignals eines Sensors des Fahrzeugs auf, wobei die Steuerung ausgebildet ist, eine Fehlfunktion des Sensors des Fahrzeugs zu erfassen. Des Weiteren besitzt das Fahrzeugsteuersystem eine Kommunikationsschnittstelle, welche ausgebildet ist, ansprechend auf die Erfassung der Fehlfunktion des Sensors durch die Steuerung ein Hilfssensorsignal über ein Kommunikationsnetzwerk anzufordern und das angeforderte Hilfssensorsignal über das Kommunikationsnetzwerk zu empfangen. Die Steuerung ist ferner dazu ausgebildet, das Fahrzeug auf der Basis des empfangenen Hilfssensorsignals autonom zu führen.

Die Aufgabe der vorliegenden Erfindung besteht darin, eine aktuelle Verkehrssituation mit den aktuell zur Verfügung stehenden Daten besser einschätzen zu können.

Erfindungsgemäß wird die Aufgabe durch ein Verfahren zum Trainieren eines lernfähigen Systems zur Prädiktion einer vorgegebenen Verkehrssituation nach Anspruch 1 gelöst. Darüber hinaus wird entsprechend der vorliegenden Erfindung ein Fahrerassistenzsystem nach Anspruch 2 sowie ein Kraftfahrzeug nach Anspruch 3 bereitgestellt.

Gemäß der vorliegenden Erfindung wird demnach ein Verfahren zum Ermitteln einer vorgegebenen Verkehrssituation bereitgestellt, wobei das Ermitteln der vorgegebenen Verkehrssituation durch ein lernfähiges System erfolgt. Das Ermitteln einer vorgegebenen Verkehrssituation bedeutet, dass Daten oder Informationen ermittelt werden, die die vorgegebene Verkehrssituation repräsentieren. Es handelt sich um eine vorgegebene Verkehrssituation, da vorab definiert werden muss, welche Verkehrssituation überhaupt ermittelt werden soll. Es wird also anhand von Eingangsdaten ein Ausgangswert ermittelt, der die vorgegebene Verkehrssituation von gegebenenfalls mehreren Verkehrssituationen repräsentiert. Ein anderer Ausgangswert kann eine andere Verkehrssituation der mehreren Verkehrssituationen repräsentieren.

Wie erwähnt wurde, erfolgt das Ermitteln der vorgegebenen Verkehrssituation durch ein lernfähiges System. Dabei handelt es sich um ein künstliches neuronales Netz. Vorzugsweise ist dieses neuronale Netz auch mehrschichtig aufgebaut. Das lernfähige System ist darauf trainiert, anhand von ersten Sensordaten einer Vielzahl von Sensordaten von Sensoren innerhalb und außerhalb eines Kraftfahrzeugs die vorgegebene Verkehrssituation zu erkennen. Es steht für das lernfähige System also eine Vielzahl von Sensordaten zur Verfügung, die von Sensoren bereitgestellt werden, welche sich außerhalb oder innerhalb des Kraftfahrzeugs befinden können. Beispielsweise befinden sich im Kraftfahrzeug eine Frontkamera, ein Radarsensor und dergleichen. Darüber hinaus kann das Fahrzeug auch Sensordaten vorzugsweise drahtlos empfangen, die von entsprechenden Sensor- oder Sendestationen stammen. Beispiele hierfür sind Verkehrsfunk, Parkplatzinformationen und dergleichen. Das lernfähige System ist nun darauf trainiert, die vorgegebene Verkehrssituation anhand vorbestimmter erster Sensordaten aus dieser Vielzahl von Sensordaten mit hoher Qualität zu bestimmen.

Werden nun die ersten Sensordaten von Sensoren innerhalb oder außerhalb des Kraftfahrzeugs nicht bereitgestellt, weil der entsprechende Sensor beispielsweise ausgefallen ist, so erfolgt durch das lernfähige System ein automatisches Auswählen eines Teils derjenigen Sensordaten von der Vielzahl von Sensordaten, die bereitgestellt werden. Das lernfähige System wählt also automatisch diejenigen Sensordaten aus, die zur Verfügung stehen und anhand derer sich mit möglichst hoher Genauigkeit feststellen lässt, ob die vorgegebene Verkehrssituation vorliegt oder nicht. Dabei kann das lernfähige System sämtliche zur Verfügung stehenden Sensordaten auswählen oder auch nur einen Teil von den noch zur Verfügung stehenden Sensordaten. Das lernfähige System hat also gelernt, auch ohne die ersten Sensordaten eine Aussage darüber zu ermitteln, ob die vorgegebene Verkehrssituation oder eventuell eine andere vorgegebene Verkehrssituation vorliegt. Im einfachsten Fall wird dann von einem Fahrerassistenzsystem oder für ein autonomes Verfahren angegeben, ob die eine vorgegebene Verkehrssituation vorliegt oder nicht. In einer Ausbaustufe kann das lernfähige System zwischen mehreren Verkehrssituationen unterscheiden und liefert entsprechende, die jeweiligen Verkehrssituationen repräsentierenden Daten.

In einer speziellen Ausgestaltung beinhaltet das Ermitteln der vorgegebenen Verkehrssituation eine Objekterkennung. So werden beispielsweise Sensordaten von einer Frontkamera, einem Radarsystem, einem Ultraschallsensor oder dergleichen bereitgestellt und eine Objekterkennungssoftware wird genutzt, um mithilfe der Sensordaten Objekte in der Umgebung des Kraftfahrzeugs zu erkennen. Anhand der erkannten Objekte lässt sich dann die jeweilige Verkehrssituation erkennen beziehungsweise klassieren. Wird z.B. ein Fußgänger auf der Fahrbahn erkannt, so kann es sich um die Verkehrssituation "Fußgängerüberweg" handeln und es kann eine entsprechende Information generiert werden. Diese Information lässt sich beispielsweise in einem Fahrerassistenzsystem oder zum autonomen Fahren nutzen.

Gegebenenfalls stammen die ersten Sensordaten von einer ersten Sensorik, die nach dem Trainieren des lernfähigen Systems ausgefallen ist, sodass sie bei dem Ermitteln der vorgegebenen Verkehrssituation nicht mehr mitwirkt. Beispielsweise stammen die ersten Sensordaten von einer Frontkamera, die während des Betriebs ausfällt. Ursprünglich wurde das lernfähige System darauf trainiert, anhand der Bilder der Frontkamera zu erkennen, ob beispielsweise die Verkehrssituation "Kreuzung mit Ampel" vorliegt. Wenn nun die Frontkamera ausgefallen ist, wählt das lernfähige System aus der Vielzahl der Sensordaten diejenigen aus, mit denen die vorgegebene Verkehrssituation, im vorliegenden Beispiel "Kreuzung mit Ampel", auch zuverlässig erkannt werden kann. Dies gelingt beispielsweise mit den Daten eines Überfahrsensors vor einer Ampel, die dem Kraftfahrzeug von außen über Funk mitgeteilt werden. Anstelle der internen Sensorsignale nutzt das Verfahren beziehungsweise das Assistenzsystem die zur Verfügung stehenden Daten von außen. Alternativ können natürlich auch andere interne oder externe Sensordaten, wie z.B. GPS-Sensordaten, für die Prädiktion der Verkehrssituation "Kreuzung mit Ampel" oder dergleichen verwendet werden.

In einer spezifischen Ausgestaltung wird eine zu der ersten Sensorik redundante zweite Sensorik bereitgestellt, die zweite Sensordaten liefert. Diese zweiten Sensordaten werden von dem lernfähigen System automatisch für den Teil der Sensordaten zum Ermitteln der vorgegebenen Verkehrssituation ausgewählt. Sofern redundante Systeme in dem Kraftfahrzeug vorhanden sind, aber auch redundante äußere Systeme, so kann das lernfähige System darauf trainiert sein, von der redundanten Sensorik die Daten zu verwenden, wenn die ursprüngliche Sensorik ausgefallen ist. Dadurch lassen sich Entscheidungen beziehungsweise Informationen hoher Qualität gewinnen.

Die oben genannte Aufgabe, Verkehrssituationen zuverlässig ermitteln zu können, wird dadurch gelöst, dass ein lernfähiges System zur Prädiktion einer vorgegebenen Verkehrssituation, in die ein Kraftfahrzeug gerät und/oder sich aktuell befindet, mit dem nachfolgend beschriebenen Verfahren trainiert wird. Unter Prädiktion soll hier nicht nur verstanden werden, eine Verkehrssituation vorherzusagen, in die ein Kraftfahrzeug gerät, sondern auch eine Verkehrssituation zu bestimmen, in der sich das Kraftfahrzeug aktuell befindet. Für das hier zur Rede stehende Trainingsverfahren wird eine Vielzahl von Sensordaten als Eingangsdaten für das lernfähige System hinsichtlich der vorgegebenen Verkehrssituation bereitgestellt. Die Ausgangsdaten für das lernfähige System, nämlich die Information, die die vorgegebene Verkehrssituation repräsentiert, sind also bekannt. Als Sensordaten werden Daten von Sensoren innerhalb und/oder außerhalb des Kraftfahrzeugs bereitgestellt. Es erfolgt nun zunächst ein Lernen der Prädiktion beziehungsweise der Ermittlung der vorgegebenen Verkehrssituation auf der Basis zumindest erster Sensordaten der Vielzahl von Sensordaten. Die ersten Sensordaten sind vorzugsweise diejenigen, mit denen die vorgegebene Verkehrssituation am zuverlässigsten ermittelt werden kann. Zusätzlich zu dem Lernen auf der Basis der ersten Sensordaten erfolgt ein Lernern der Prädiktion beziehungsweise Ermittlung der vorgegebenen Verkehrssituation auch auf der Basis der Vielzahl von Sensordaten ohne die ersten Sensordaten. Dies bedeutet, dass bewusst auch der Fall gelernt werden muss, dass die vorgegebene Verkehrssituation vorliegt, aber die ersten Sensordaten nicht zur Verfügung stehen. Für diesen Fall wählt das System andere Sensordaten als die ersten Sensordaten aus der Vielzahl der Sensordaten aus, um mit ihnen auch entscheiden zu können, ob die vorgegebene Verkehrssituation vorliegt oder nicht.

Bei dem Lernen handelt es sich beispielsweise um überwachtes Lernen. Es ist dabei das Ergebnis (vorgegebene Verkehrssituation) bekannt und die aus den Sensordaten dazu führenden Gesetzmäßigkeiten werden durch das lernende System nachgebildet.

Alternativ kann es sich aber auch um bestärkendes Lernen (reinforcement learning) handeln. Dabei ist die Strategie selbstständig durch "try and error" zu ermitteln. Hier wird dem System nicht vorgezeigt, welche Aktion in welcher Situation die beste ist.

Bei dem Lernen der Prädiktion beziehungsweise Ermittlung werden die ersten Sensordaten durch das neuronale Netz zufällig für eine bestimmte Zeitdauer deaktiviert. Dies erfolgt derart, dass bewusst auch der Fall gelernt wird, dass die vorgegebene Verkehrssituation vorliegt, aber die ersten Sensordaten nicht zur Verfügung stehen. Dies bedeutet, dass bei dem Lernen die ersten Sensordaten zeitweise nicht zur Verfügung stehen. Dabei ist der Zeitpunkt des Ausfalls der ersten Sensordaten ungewiss. Das lernfähige System ist in den Zeitintervallen, in denen die ersten Sensordaten ausgefallen sind, darauf angewiesen, andere Sensordaten für die Prädiktion der gleichen Verkehrssituation zu nutzen, die sonst maßgeblich durch die ersten Sensordaten bestimmt wird. Dadurch wird das System robust gegen zeitlich unbestimmte Ausfälle der ersten Sensordaten. Natürlich kann das System auch hinsichtlich des Ausfalls anderer Sensordaten auf gleiche Weise trainiert werden.

Das lernfähige System beruht auf einem neuronalen Netz. Ein solches neuronales Netz kann insbesondere mehrere Schichten (layer) aufweisen. Damit kann beispielsweise tiefgehendes Lernen (deep learning) durch das künstliche neuronale Netz realisiert werden.

Darüber hinaus können für die Vielzahl von Sensordaten Daten von Sensoren außerhalb des Kraftfahrzeugs über Rundfunk oder das Internet bereitgestellt werden. Generell können die Sensordaten von Sensoren außerhalb des Kraftfahrzeugs über beliebige Kommunikationstechniken dem Kraftfahrzeug zur Verfügung gestellt werden. Hierfür eignen sich beispielsweise die WLAN-Technologie oder die Bluetooth-Technologie. Grundsätzlich ist dafür aber auch Nahfeldkommunikation und dergleichen geeignet.

Ferner können für die Vielzahl von Sensordaten auch Daten von Sensoren außerhalb des Kraftfahrzeugs, die fest an Verkehrswegen installiert sind, bereitgestellt werden. So können beispielsweise von Ampelschaltungen Ampelphasen oder von Parkplatzsystemen Informationen über belegte Parkplätze und dergleichen bereitgestellt werden.

Wie oben bereits angedeutet wurde, kann erfindungsgemäß ein Fahrerassistenzsystem mit einem lernfähigen System zur Verfügung gestellt werden, wobei das Fahrerassistenzsystem zum Durchführen eines Verfahrens entsprechend den vorhergehenden Ausführungen ausgebildet ist. Ein derartiges Fahrerassistenzsystem kann den Fahrer in den jeweiligen Verkehrssituationen unterstützen oder ihn sogar vollkommen autonom durch die jeweiligen Verkehrssituationen führen.

Des Weiteren wird hier auch ein Kraftfahrzeug mit einem Fahrerassistenzsystem der oben geschilderten Art bereitgestellt. Dabei kann das Fahrerassistenzsystem entsprechend der Variationsmöglichkeiten und Vorteilen der oben geschilderten Verfahren weitergebildet werden. Die genannten Verfahrensmerkmale stellen dabei entsprechende funktionelle Merkmale des Fahrerassistenzsystems beziehungsweise des Kraftfahrzeugs dar.

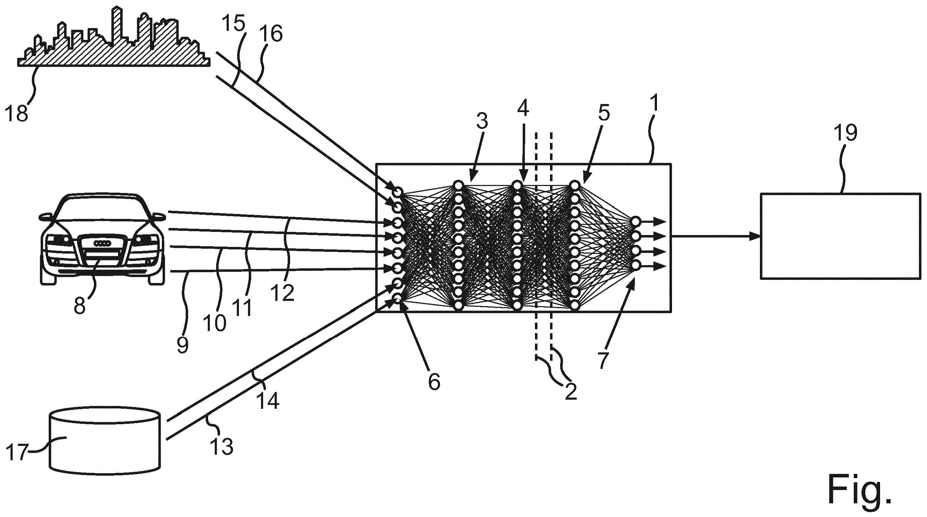

Die vorliegende Erfindung wird nun anhand der beigefügten Zeichnung näher erläutert, die schematisch ein lernfähiges System zur Situationsinterpretation zeigt.

Die nachfolgend näher geschilderten Ausführungsbeispiele stellen bevorzugte Ausführungsformen der vorliegenden Erfindung dar. Dabei ist zu beachten, dass die einzelnen Merkmale nicht nur in den geschilderten Merkmalskombinationen, sondern auch in Alleinstellung oder in anderen technisch sinnvollen Merkmalskombinationen realisiert werden können.

In einer spezifischen Ausgestaltung lernt das System beispielsweise zu jedem Zeitpunkt einer Fahrt die ihm zur Verfügung gestellte Sensorik im Fahrzeug, in seiner Umwelt (z.B. "Smart City") oder über eine Online-Verbindung selbst zu wählen, sodass die Interpretation der aktuellen beziehungsweise bevorstehenden Verkehrssituation optimal ist. Weiter lernt das System selbstständig, welche Sensorik bei einem Ausfall beziehungsweise Nicht-Vorhandensein durch andere Sensorik ersetzt werden kann.

Das System "wählt" beispielsweise durch entsprechende Gewichtung zur Verfügung stehender Sensordaten. Auch das "Ersetzen" erfolgt beispielsweise dadurch, dass Gewichte in dem lernfähigen System (z.B. neuronales Netz) verändert werden.

In einem konkreten Beispiel lernt das System beispielsweise anhand der Sensordaten einer Frontkamera, unter welchen Umständen die Verkehrssituation "Kreuzung mit Ampel" (vorgegebene Verkehrssituation) gegeben ist. Die Sensordaten der Frontkamera stellen dabei erste Sensordaten dar. Die Sensorik des Fahrzeugs verfügt gegebenenfalls über eine weitere Kamera, die in redundanter Weise etwa 80 Prozent des Bildausschnitts der Frontkamera aufnimmt. Das System lernt nun in der tatsächlichen Verkehrssituation "Kreuzung mit Ampel", ohne die Sensordaten der Frontkamera auszukommen und trotzdem aus den Daten der redundanten Kamera die korrekte Verkehrssituation "Kreuzung mit Ampel" zu schätzen, zu ermitteln beziehungsweise vorherzusagen. Das System hat also die Verkehrssituation "Kreuzung mit Ampel" zweimal gelernt, nämlich mit den ersten Sensordaten der Frontkamera und ohne die ersten Sensordaten der Frontkamera. Fällt nun die Frontkamera aus, so hat das System keine Schwierigkeiten, trotzdem zuverlässig die korrekte Verkehrssituation zu ermitteln, da es ja gelernt hat, auf die ersten Sensordaten, nämlich diejenigen der Frontkamera, zu verzichten.

In vorteilhafter Weise ergibt sich somit eine zuverlässigere Situationsinterpretation 19 (vgl. Figur) und Prädiktion der Verkehrslage, da das System stets selbst die vertrauenswürdigsten Sensoren auswählt. Im Zweifelsfall werden alle übrigen Sensordaten verwendet, die zur Verfügung stehen. Diese zuverlässige Situationsinterpretation 19 wirkt sich besonders beim autonomen Steuern eines Fahrzeugs aus. Kann die Verkehrssituation nämlich nicht zuverlässig interpretiert werden, so muss die Fahraufgabe vom Steuerungssystem an den Fahrer zurückgegeben werden. Andernfalls, wenn die Verkehrssituation zuverlässig interpretiert wird, kann die Fahraufgabe vom System beibehalten werden und das autonome Fahren muss nicht abgebrochen werden, auch wenn bestimmte Sensordaten nicht zur Verfügung stehen.

Die technische Umsetzung kann beispielsweise entsprechend der in der Figur schemenhaft dargestellten Skizze erfolgen. Kernstück des lernfähigen Systems ist beispielsweise ein neuronales Netz 1. Es kann sich um ein mehrschichtiges neuronales Netz handeln, was die gestrichelten Linien 2 andeuten. Das mehrschichtige neuronale Netz kann beispielsweise drei verborgene Schichten (hidden layers) 3, 4 und 5 (in der Regel mehr Schichten) aufweisen. Dabei ist jeder Knoten einer Schicht meist mit jedem Knoten der jeweils benachbarten Schichten verbunden (symbolische Betrachtungsweise). Darüber hinaus verfügt das mehrschichtige neuronale Netz über eine Eingangsschicht 6 und eine Ausgangsschicht 7. Die Knoten der Eingangsschicht 6 sind mit den Knoten der ersten verborgenen Schicht 3 und die Knoten der Ausgangsschicht 7 sind mit den Knoten der dritten verborgenen Schicht 5 verbunden. Die Signale der Ausgangsschicht 7 werden unmittelbar für die Situationsinterpretation 19 verwendet.

Die Eingangsschicht 6 dient zur Aufnahme der Sensordaten. So ist beispielsweise jeder Knoten der Eingangsschicht 6 mit einer jeweiligen Sensordatenquelle verbunden. Eine Sensordatenquelle kann beispielsweise ein Sensor innerhalb desjenigen Kraftfahrzeugs 8 sein, das auch das neuronale Netz 1 beinhaltet. Im vorliegenden Beispiel liefern vier interne Sensoren jeweilige Sensordaten 9, 10, 11 und 12 an Knoten der Eingangsschicht 6.

Darüber hinaus stehen dem lernfähigen System beziehungsweise neuronalen Netz 1 auch Sensordaten 13, 14, 15 und 16 von Sensoren außerhalb des Kraftfahrzeugs 8 zur Verfügung. Diese Sensoren außerhalb des Kraftfahrzeugs 8 stellen externe Informationsquellen dar. Diese Informationsquellen können beispielsweise unterteilt werden in ein sogenanntes "Back End" 17 und eine "Smart City" 18. Über das Back End 17 können externe Daten beispielsweise über Rundfunk, Internet und dergleichen abgerufen werden. Die Sensordaten 13, 14 vom Back End 17 enthalten beispielsweise Informationen über das Wetter, die Verkehrslage, Satellitenbilder, Statistik (z.B. wie viele Fahrzeuge während der Hauptverkehrszeit eine Kreuzung passieren) oder dergleichen.

Gleichzeitig können von der Smart City 18 weitere Sensordaten 15, 16 zur Verfügung gestellt werden. Dabei kann es sich beispielsweise um Informationen bezüglich Ampelphasen, Parkplatzbelegungen, Spurbelegung vor einer Ampel und so weiter handeln.

Bei dem Lernen, das der Betriebsphase vorausgeht, handelt es sich um ein maschinelles Lernverfahren, z.B. um tiefgehendes Lernen mit einem mehrschichtigen neuronalen Netz. Das neuronale Netz bekommt als Eingangsparameter die Rohwerte vorzugsweise aller dem Fahrzeug aus seiner eigenen Sensorik, der Umweltsensorik sowie Messwerten aus Onlinediensten (externe Sensorik) zur Verfügung gestellt. Mithilfe einer ausreichend großen Menge an Trainingsdaten (mit vorhandener "ground truth") wird das Netz so trainiert, dass die Eingangssignale die korrekten Ausgabewerte der Trainingsdaten generieren.

Um das Netzwerk unabhängig von einzelner Sensorik zu gestalten, werden im Trainingsprozess zufällig einzelne Input-Sensorwerte für eine definierte Zeit deaktiviert, sodass diese für das Netzwerk nicht zur Verfügung stehen. Das Netz ist dadurch gezwungen, die Information aus den übrigen Sensoren zu rekonstruieren und lernt selbstständig, unter verschiedenen Sensorverfügbarkeiten zu agieren.

Ein solches Training ist extrem daten- und rechenintensiv. Die dahinterliegende Netzwerkarchitektur kann mehrere 100 Schichten (layer) umfassen.

## Patentansprüche

1. Verfahren zum Trainieren eines lernfähigen Systems (1) zur Prädiktion einer vorgegebenen Verkehrssituation, in die ein Kraftfahrzeug (8) gerät und/oder sich aktuell befindet durch
- Bereitstellen einer Vielzahl von Sensordaten (9 bis 16) als Eingangsdaten für das lernfähige System (1) hinsichtlich der vorgegebenen Verkehrssituation, wobei die Vielzahl von Sensordaten (9 bis 16) von Sensoren innerhalb und/oder außerhalb des Kraftfahrzeugs (8) bereitgestellt werden,
- wobei für die Vielzahl von Sensordaten (9 bis 16) Daten von außerhalb eines Kraftfahrzeugs (8) befindlichen Sensoren über Rundfunk oder das Internet bereitgestellt werden, oder
- für die Vielzahl von Sensordaten (9 bis 16) Daten von Sensoren außerhalb des Kraftfahrzeugs (8), die fest an Verkehrswegen installiert sind, bereitgestellt werden und
- wobei das lernfähige System (1) auf einem neuronalen Netz beruht,
- Lernen der Prädiktion der vorgegebenen Verkehrssituation auf der Basis zumindest erster Sensordaten der Vielzahl von Sensordaten (9 bis 16) und
- Lernen der Prädiktion der vorgegebenen Verkehrssituation auch auf der Basis der Vielzahl von Sensordaten (9 bis 16) ohne die ersten Sensordaten, wobei bei dem Lernen der Prädiktion die ersten Sensordaten durch das neuronale Netz zufällig für eine bestimmte Zeitdauer deaktiviert werden, sodass bewusst jener Fall gelernt wird, dass die vorgegebene Verkehrssituation vorliegt, aber die ersten Sensordaten nicht zur Verfügung stehen.

2. Fahrerassistenzsystem mit einem lernfähigen System (1), wobei das Fahrerassistenzsystem zum Durchführen des Verfahrens gemäß Anspruch 1 ausgebildet ist.

3. Kraftfahrzeug (8) mit einem Fahrerassistenzsystem nach Anspruch 2.

## Claims

1. Method for training an adaptive system (1) in order to predict a specified traffic situation which a motor vehicle (8) is entering and/or is currently experiencing by
- providing a plurality of sensor data (9 to 16) as input data for the adaptive system (1) with respect to the specified traffic situation, wherein the plurality of sensor data (9 to 16) are provided by sensors inside and/or outside the motor vehicle (8),
- wherein, for the plurality of sensor data (9 to 16), data from sensors located outside a motor vehicle (8) are provided via broadcasting or the Internet, or
- for the plurality of sensor data (9 to 16), data from sensors outside the motor vehicle (8), which are permanently installed on traffic routes, are provided, and
- wherein the adaptive system (1) is based on a neural network,
- learning the prediction of the specified traffic situation on the basis of at least first sensor data of the plurality of sensor data (9 to 16), and
- learning the prediction of the specified traffic situation also on the basis of the plurality of sensor data (9 to 16) without the first sensor data, wherein during the learning of the prediction, the first sensor data are randomly deactivated by the neural network for a certain period of time, so that the case in which the specified traffic situation is present but the first sensor data are not available is intentionally learnt.

2. Driver assistance system having an adaptive system (1), wherein the driver assistance system is designed to perform the method according to claim 1.

3. Motor vehicle (8) having a driver assistance system according to claim 2.

## Revendications

1. Procédé de formation d'un système adaptatif (1) pour la prédiction d'une situation de circulation routière prédéfinie, dans laquelle un véhicule automobile (8) entre et/ou se trouve actuellement par
- la fourniture d'une pluralité de données de capteur (9 à 16) comme données d'entrée pour le système adaptatif (1) concernant la situation de circulation routière prédéfinie, dans lequel la pluralité de données de capteur (9 à 16) est fournie par des capteurs à l'intérieur et/ou à l'extérieur du véhicule automobile (8),
- dans lequel pour la pluralité de données de capteur (9 à 16), des données sont fournies par des capteurs se trouvant à l'extérieur d'un véhicule automobile (8) par le biais de la radiodiffusion ou l'Internet, ou
- pour la pluralité de données de capteur (9 à 16), des données sont fournies par des capteurs à l'extérieur du véhicule automobile (8) qui sont installés fixement au niveau des voies de circulation et
- dans lequel le système adaptatif (1) repose sur un réseau neuronal,
- l'apprentissage de la prédiction de la situation de circulation routière prédéfinie sur la base au moins des premières données de capteur de la pluralité de données de capteur (9 à 16) et
- l'apprentissage de la prédiction de la situation de circulation routière prédéfinie aussi sur la base de la pluralité de données de capteur (9 à 16) sans les premières données de capteur, dans lequel lors de l'apprentissage de la prédiction, les premières données de capteur sont désactivées par le réseau neuronal aléatoirement pendant une durée déterminée de sorte qu'il soit appris consciemment que la situation de circulation routière prédéfinie existe mais les premières données de capteur ne sont pas à disposition.

2. Système d'assistance au conducteur avec un système adaptatif (1), dans lequel le système d'assistance au conducteur est formé pour la mise en oeuvre du procédé selon la revendication 1.

3. Véhicule automobile (8) avec un système d'assistance au conducteur selon la revendication 2.
